# EUROPÄISCHE PATENTANMELDUNG

(11) **EP 3 068 141 A1**
(43) Veröffentlichungstag der Anmeldung: **14.09.2016**
(21) Anmeldenummer: 16155814.3
(22) Anmeldetag: 16.02.2016
(51) Int. Cl.: H04R 1/10, G10L 21/0216, G10L 21/0232

(54) **VERFAHREN ZUR FREQUENZABHÄNGIGEN RAUSCHUNTERDRÜCKUNG EINES EINGANGSSIGNALS**

(30) Priorität: 10.03.2015 DE 102015204253
(71) Anmelder: Sivantos Pte. Ltd., Singapore 139959 (SG)
(72) Erfinder: PUDER, Henning, 91058 Erlangen (DE)
(74) Vertreter: FDST Patentanwälte

(57) **Zusammenfassung**

Die Erfindung nennt ein Verfahren (20) zur frequenzabhängigen Rauschunterdrückung eines Eingangssignals (2), wobei das Eingangssignal (2) auf einen Hauptsignalpfad (6) und einen Nebensignalpfad (8) verteilt wird, wobei das Eingangssignal (2) mittels einer Filterbank (4) in eine Mehrzahl von Frequenzbändern (B1-B7) jeweils bestimmter Bandbreite (W) und Mittenfrequenz (f1-f7) zerlegt wird, wobei im Nebensignalpfad (8) in jedem Frequenzband (B1-B7) die Bandbreite (W) des Signalanteils reduziert und dabei jeweils ein reduziertes Frequenzband (Br1-Br7) gebildet wird, wobei in jedem reduzierten Frequenzband (Br1-Br7) anhand des Signalanteils des Eingangssignals (2) ein Unterdrückungsparameter (R1-R7) ermittelt wird, und wobei im Hauptsignalpfad (6) in jedem Frequenzband (B1-B7) ein Rauschen (12) im Eingangssignal (2) anhand des jeweiligen Unterdrückungsparameters (R1-R7) unterdrückt wird.

## Beschreibung

Die Erfindung betrifft ein Verfahren zur frequenzabhängigen Rauschunterdrückung eines Eingangssignals, wobei das Eingangssignal in eine Mehrzahl von Frequenzbändern jeweils bestimmter Bandbreite und Mittenfrequenz zerlegt wird, wobei in jedem Frequenzband anhand des Signalanteils des Eingangssignals ein Unterdrückungsparameter ermittelt wird, und wobei in jedem Frequenzband ein Rauschen im Eingangssignal anhand des jeweiligen Unterdrückungsparameters unterdrückt wird.

In einem Hörgerät kann je nach aktueller Hörsituation, in welcher sich ein Benutzer befindet, zur Verbesserung der Hörqualität für den Benutzer die Anforderung auftreten, an einem Eingangssignal, welches durch das oder die Mikrofone des Hörgerätes aufgenommen wird, eine Rauschunterdrückung durchzuführen. Oftmals befindet sich ein Benutzer beispielsweise in einer Hörsituation, in welcher die eigentlich gewünschte Wahrnehmung eines Nutzsignals durch das Vorhandensein eines breitbandigen Rauschens erschwert wird. Insbesondere kann hierbei das Nutzsignal ein relativ schmalbandiges Frequenzspektrum aufweisen, und von einer räumlich klar definierbaren Schallquelle stammen, während hingegen das Rauschen durch eine Überlagerung einer Vielzahl von Schallquellen mit unterschiedlichen Frequenzspektren und unterschiedlichen Relativpositionen bezüglich des Benutzers keiner klar definierten Raumrichtung zugeordnet werden kann.

Die technische Herausforderung in einem Hörgerät besteht nun darin, den Pegel des Rauschens im Eingangssignal möglichst weit abzusenken und das Rauschen hierdurch zu unterdrücken, während der Pegel des Nutzsignales von dieser Absenkung möglichst nicht betroffen sein soll, also das Signal-zu-Rausch-Verhältnis verbessert werden soll, wobei im Hörgerät selbst nur begrenzter Bauraum für die Vorrichtungen zur erforderlichen Signalverarbeitung zur Verfügung stehen.

In der geschilderten Hörsituation, in welcher ein schmalbandiges Nutzsignal von einem breitbandigen Rauschen überlagert ist, und das Rauschen unterdrückt werden soll, werden auf das Eingangssignal oftmals frequenzbandabhängige Verstärkungs- oder Reduktionskoeffizienten angewandt. Das Eingangssignal durchläuft hierbei zunächst eine Filterbank, und wird durch diese in eine Mehrzahl von Frequenzbändern jeweils bestimmter Bandbreite und Mittenfrequenz zerlegt, wobei die Frequenzbänder sich teilweise überlappen. Für jedes einzelne Frequenzband wird nun anhand des Pegels des Signalanteils im Frequenzband jeweils ein Reduktionskoeffizient ermittelt, und der Pegel des Eingangssignals in den einzelnen Frequenzbändern anhand der jeweiligen Reduktionskoeffizienten abgesenkt bzw. angehoben. Hierdurch wird in Frequenzbändern, in welchen kein Nutzsignal, sondern nur Rauschen vorliegt, der Signalpegel im Verhältnis zum Nutzsignal abgesenkt. In Frequenzbändern, in welchen ein hoher spektraler Anteil des Nutzsignals vorzufinden ist, fällt eine Absenkung des Pegels geringer aus bzw. wird der Signalpegel stärker angehoben. Insgesamt wird hierdurch das Signal-zu-Rausch-Verhältnis verbessert.

Aufgrund des Überlapps jeweils benachbarter Frequenzbänder kann es jedoch oft vorkommen, dass ein schmalbandiges Nutzsignal, dessen wesentliche spektrale Anteile vorrangig in einem bestimmten Frequenzband konzentriert sind, durch den Überlapp auch zu einem nennenswerten Signalpegel in einem benachbarten Frequenzband führen. Hierdurch wird im benachbarten Frequenzband der Reduktionskoeffizient für die Absenkung des Signalpegels beeinflusst. Das Resultat ist, dass im betreffenden benachbarten Frequenzband durch diese Beeinflussung des Reduktionskoeffizienten eine geringere Rauschunterdrückung stattfindet. Hierdurch kommt es gerade in der spektralen Umgebung des Nutzsignals zu einem schlechteren Signal-zu-Rausch-Verhältnis.

Der Erfindung liegt die Aufgabe zugrunde, ein Verfahren zur Rauschunterdrückung eines Eingangssignals anzugeben, in welchem ein schmalbandiges Nutzsignal möglichst wenig durch die Unterdrückung des Rauschens beeinträchtigt wird, und welches insbesondere in Frequenzbändern in der Nähe des Nutzsignals ein möglichst gutes Signal-zu-Rausch-Verhältnis ermöglichen soll.

Die genannte Aufgabe wird erfindungsgemäß gelöst durch ein Verfahren zur frequenzabhängigen Rauschunterdrückung eines Eingangssignals, wobei das Eingangssignal auf einen Hauptsignalpfad und einen Nebensignalpfad verteilt wird, wobei das Eingangssignal mittels einer Filterbank in eine Mehrzahl von Frequenzbändern jeweils bestimmter Bandbreite und Mittenfrequenz zerlegt wird, wobei im Nebensignalpfad in jedem Frequenzband die Bandbreite des Signalanteils reduziert und dabei jeweils ein reduziertes Frequenzband gebildet wird, wobei in jedem reduzierten Frequenzband anhand des Signalanteils des Eingangssignals ein Unterdrückungsparameter ermittelt wird, und wobei im Hauptsignalpfad in jedem Frequenzband ein Rauschen im Eingangssignal anhand des jeweiligen Unterdrückungsparameters unterdrückt wird. Vorteilhafte und teils für sich gesehen erfinderische Ausgestaltungsformen der Erfindung sind in den Unteransprüche und der nachfolgenden Beschreibung dargelegt.

Insbesondere weisen hierbei die einzelnen Frequenzbänder jeweils einen Betrags-Frequenzgang mit einem die Mittenfrequenz umgebenden Durchlassbereich auf, welcher mit zunehmendem Abstand zur Mittenfrequenz jeweils in einen Sperrbereich übergeht, wobei im Sperrbereich eines Frequenzbandes kein nennenswerter Signalanteil zu verzeichnen ist. Insbesondere weisen hierbei die Betrags-Frequenzgänge mehrerer Frequenzbänder auch außerhalb der jeweiligen Sperrbereiche einen nennenswerten Überlapp auf, und insbesondere weisen dabei auch die Betrags-Frequenzgänge von Frequenzbändern, deren Mittenfrequenzen nicht unmittelbar benachbart, sondern durch weitere Mittenfrequenzen beabstandet sind, einen nennenswerten Überlapp außerhalb der jeweiligen Sperrbereiche auf.

Die Unterdrückungsparameter können hierbei insbesondere durch Reduktionskoeffizienten gegeben sein. Das frequenzbandweise Unterdrücken eines Rauschens im Eingangssignal anhand des jeweiligen Reduktionskoeffizienten kann dabei beispielsweise über ein entsprechendes Absenken des Singalpegels in jedem Frequenzband gemäß dem Reduktionskoeffizienten erfolgen. Ebenso kann das Signal in jedem Frequenzband in Abhängigkeit vom Reduktionskoeffizienten verstärkt bzw. der Signalpegel angehoben werden. Bevorzugt bleiben bei der Reduktion der Bandbreite in jedem Frequenzband die Mittenfrequenz und der Frequenzgang bei der Mittenfrequenz erhalten.

Insbesondere kann das Eingangssignal zunächst auf einen Hauptsignalpfad und einen Nebensignalpfad verteilt werden, und anschließend mittels jeweils einer Filterbank in eine Mehrzahl von Frequenzbändern zerlegt werden, wobei die Frequenzbänder im Hauptsignalpfad und im Nebensignalpfad jeweils die gleichen Bandbreiten und Mittenfrequenzen aufweisen. Zur Aufteilung auf einen Hauptsignalpfad und einen Nebensignalpfad kann das Eingangssignal insbesondere dupliziert werden. Ebenso kann jedoch das Eingangssignal zunächst eine Filterbank durchlaufen, und anschließend auf einen Hauptsignalpfad und einen Nebensignalpfad verteilt werden.

Der Erfindung liegen hierbei folgende Überlegungen zugrunde: Ein grundsätzliches Problem von Verfahren zur frequenzabhängigen Rauschunterdrückung eines Eingangssignals liegt darin, dass hierfür das Eingangssignal bevorzugt in einzelne Frequenzbänder zu filtern ist. Die Frequenzbänder sollten dabei möglichst ohne Verzerrung das Eingangssignal auflösen. Benachbarte Frequenzbänder weisen dabei wenigstens an den Rändern ihrer jeweiligen Durchlassbereiche einen nicht zu vernachlässigenden Überlapp auf, welcher u.a. von der Bandbreite der jeweiligen Frequenzbänder abhängt. Wird beispielsweise das Eingangssignal mit einigen wenigen breitbandigen Frequenzbändern aufgelöst, so weisen deren Betrags-Frequenzgänge an den jeweiligen Rändern der Durchlassbereiche einen deutlichen Überlapp auf, d.h., bei einzelnen Frequenzen weisen jeweils die Frequenzgänge mehrerer Frequenzbänder einen nennenswerten Betrag auf.

Durch diesen Überlapp jeweils benachbarter Frequenzbänder kann jedoch ein schmalbandiges Nutzsignal auch in benachbarten Frequenzbändern einen signifikanten Signalanteil aufweisen und zu einem dementsprechenden Pegel führen. Somit kann dort der Unterdrückungsparameter im benachbarten Frequenzband beeinflusst werden, was für dieses die Rauschunterdrückung und somit das Signal-zu-Rausch-Verhältnis beeinträchtigt. Die Frequenzbänder eines schmalbandigeren Filters weisen in ihrem Betrags-Frequenzgängen hingegen üblicherweise jeweils einen steileren Übergang vom jeweiligen Durchlassbereich zum Sperrbereich auf, wodurch auch der Überlapp jeweils benachbarter Frequenzbänder geringer ist.

Um nun die genannte Beeinträchtigung der Unterdrückungsparameter benachbarter Frequenzbänder zu verringern, können die einzelnen Frequenzbänder der Filterung jedoch nicht beliebig schmalbandig gestaltet werden, da für eine Verringerung der Bandbreite eines Filters im Frequenzraum eine längere Signallaufzeit des Eingangssignals erforderlich ist. Dies ist jedoch insbesondere bei Anwendungen unerwünscht, welche mit möglichst wenig Verzögerung durchzuführen sind, beispielsweise in einem Hörhilfegerät, wo ein aufgenommenes, aufbereitetes und wiedergegebenes Akustiksignal möglichst wenig Verzögerung zu den optischen Eindrücken eines Anwenders aufweisen sollte. Hinsichtlich der Arbeitsweise der Filterbank ist somit für das Verfahren zur Rauschunterdrückung ein Trade-off zwischen einer gewünschten Auflösung der Filterbank und einer noch tolerablen Latenz zu bestimmen.

Da somit die Bandbreite der einzelnen Frequenzbänder der Filterbank nicht beliebig reduziert werden kann, ist auch der Überlapp zwischen jeweils benachbarten Frequenzbändern nach unten beschränkt. Eine Verbesserung der Rauschunterdrückung in der spektralen Umgebung eines schmalbandigen Nutzsignals ist daher vorliegend nicht über eine Verringerung der Bandbreite der einzelnen Frequenzbänder der Filterbank zu erreichen.

Die einzelnen Frequenzbänder setzen das volle Spektrum derart zusammen, dass die jeweiligen Signalanteile der Frequenzbänder im Ausgangssignal ein Eingangssignal abbilden. Eine erneute Filterung der Signalanteile in den einzelnen Frequenzbändern kann daher zur Verzerrung im Endsignal führen, da hierdurch spektrale Anteile des Eingangssignals willkürlich verzerrt und/oder gedämpft werden könnten. Daher kann der Einfluss, welchen ein schmalbandiges Nutzsignal auf die Rauschunterdrückung in benachbarten Frequenzbändern ausübt, auch nicht über die direkte Filterung der Signalanteile in den Frequenzbändern erfolgen, welche das Ausgangssignal bilden.

Eine für die Erfindung wesentliche, überraschende Erkenntnis ist nun, nicht jene Signalanteile der Frequenzbänder, welche das Ausgangssignal bilden, zu filtern bzw. in ihrer Bandbreite zu reduzieren, sondern in den einzelnen Frequenzbändern die Bandbreite nur für die Berechnung der Reduktionskoeffizienten, anhand derer die Rauschunterdrückung frequenzbandabhängig durchgeführt wird, zu reduzieren. Anhand der so berechneten Unterdrückungsparameter kann in jedem Frequenzband nun ein Rauschen im Eingangssignal unterdrückt werden, wodurch die jeweilige spektrale Information der Signalanteile in den einzelnen Frequenzbändern für das Ausgangssignal erhalten bleibt.

Dieses Vorgehen hat folgende Vorteile: Die Reduktion der Bandbreite und/oder des Durchlassbereichs in einem Frequenzband vor der Berechnung des jeweiligen des Unterdrückungsparameters verringert den Überlapp und/oder den Cross-Talk benachbarter Frequenzbänder. Dadurch wird der Signalanteil des Eingangssignals, anhand dessen der Unterdrückungsparameter ermittelt wird, vornehmlich nur im gewünschten Frequenzband registriert. Wird nun im Hauptsignalpfad anhand der so ermittelten Reduktionskoeffizienten in jedem Frequenzband das Rauschen im Eingangssignal unterdrückt, so werden durch ein schmalbandiges Nutzsignal die Unterdrückungsparameter in benachbarten Frequenzbändern deutlich weniger beeinflusst, und hierdurch das Signal-zu-Rausch-Verhältnis verbessert. Dadurch, dass eine weitere Filterung bzw. die Reduktion der Bandbreite in den einzelnen Frequenzbändern nur für die Berechnung der Unterdrückungsparameter, nicht aber für die Ausgabe des endgültigen Signals erfolgt, bleibt in jedem Frequenzband die spektrale Information des jeweiligen Signalanteils erhalten, wodurch eine Verzerrung des Ausgangssignals unterbunden werden kann.

Günstigerweise wird in einer Anzahl an reduzierten Frequenzbändern zur Ermittlung des Reduktionskoeffizienten jeweils ein Pegel des Signalanteils über die reduzierte Bandbreite herangezogen. Insbesondere wenn ein Nutzsignal mehrere schmalbandige Signalpeaks aufweist, welche in eines oder in wenige reduzierte Frequenzbänder fallen, vermag ein Reduktionskoeffizient, welcher mittels des integrierten Pegels bestimmt wird, die realen spektralen Eigenschaften des Nutzsignals, insbesondere die spektrale Dichte, im reduzierten Frequenzband detailgetreu wiederzugeben.

Als vorteilhaft erweist sich, wenn das Eingangssignal wenigstens für den Nebensignalpfad digitalisiert wird. Das Eingangssignal kann dabei auch für den Hauptsignalpfad digitalisiert werden. Sowohl die Reduktion der Bandbreite als auch die Ermittlung der Reduktionskoeffizienten lässt sich in einem digitalisierten Eingangssignal besonders effizient durchführen, da hierfür außer eines AD-Wandlers im Signalweg und ggf. eines DA-Wandlers für eine eventuelle Rekonvertierung des rauschunterdrückten Ausgangssignals keine weitere Hardware erforderlich ist. Dies ermöglicht die Anwendung des Verfahrens auch in Geräten, in welchen der Bauraum für Hardware erheblich begrenzt ist, wie es z.B. in einem Hörgerät der Fall ist.

Zweckmäßigerweise wird im Nebensignalpfad in jedem Frequenzband die Bandbreite des Signalanteils durch ein Filter reduziert. Durch die Verwendung eines Filters lässt sich die Bandbreite besonders zeiteffizient reduzieren.

Als weiter vorteilhaft erweist sich hierbei, wenn im Nebensignalpfad für jedes Frequenzband die Mittenfrequenz auf Null verschoben wird, und anschließend die Bandbreite des Signalanteils durch ein Tiefpass-Filter reduziert wird. Durch das Verschieben der Mittenfrequenz auf Null kann dabei die Bandbreite in allen Frequenzbändern auf dieselbe Weise reduziert werden, was die Implementierung der Reduktion der Bandbreite vereinfacht. Sollen im Nebensignalpfad aus den reduzierten Frequenzbändern nur die jeweiligen Reduktionskoeffizienten ermittelt werden, kann ein erneutes Anpassen der Mittenfrequenz auf ihren ursprünglichen Wert unterbleiben. Allgemein kann die Filterbank auch durch eine Mehrzahl an Bandpässen gebildet werden, wobei die Bandpässe jeweils durch einen mit einer vom jeweiligen Kanal des Filterbank abhängigen Phase multiplizierten Tiefpass implementiert werden können. Die Reduktion der Bandbreite kann dabei durch die Anwendung eines weiteren Tiefpass-Filters erfolgen.

In einer weiter vorteilhaften Ausgestaltung der Erfindung wird durch ein Richtmikrofon das Eingangssignal aufgenommen, wobei im Eingangssignal anhand der Unterdrückungsparameter das Rauschen durch eine frequenzabhängige Adaption der Richtcharakteristik des Richtmikrofons unterdrückt wird. Eine frequenzabhängige Rauschunterdrückung kann gerade bei Richtmikrofonen auch in Abhängigkeit der Raumrichtung, aus welcher ein Schall eintrifft, gewünscht sein. Das angegebene Verfahren erlaubt hierbei eine effiziente Rauschunterdrückung, welche die bevorzugte Richtcharakteristik des Richtmikrofons möglichst beibehält. Die Unterdrückungsparameter können hierbei insbesondere zur Bestimmung der Richtparameter bzw. Richtcharakteristiken in den einzelnen Frequenzbändern herangezogen werden.

Günstigerweise wird hierbei durch das Richtmikrofon ein mehrkanaliges Eingangssignal aufgezeichnet, wobei das Eingangssignal in jedem Kanal mittels einer Filterbank in eine Mehrzahl von Frequenzbändern zerlegt wird, wobei für jeden Kanal jeweils ein Unterdrückungsparameter für jedes Frequenzband mittels des entsprechenden reduzierten Frequenzbandes ermittelt wird, und wobei für jedes Frequenzband die Richtcharakteristik aus den Signalanteilen aller Kanäle in Abhängigkeit von den jeweiligen Unterdrückungsparametern adaptiert wird. Insbesondere kann dabei ein differentielles Richtmikrofon verwendet werden.

Ein differentielles Richtmikrofon umfasst zwei oder mehr meist omnidirektionale Mikrofone, deren Signale derart mit jeweils minimaler Zeitverzögerung überlagert werden, dass durch diese Zeitverzögerung die reale Zeitverzögerung, mit welcher ein aus einer bestimmten Raumrichtung kommender Schall auf die einzelnen Mikrofone auftrifft und von diesen registriert wird, kompensiert werden kann. Hierdurch kann der Schall aus der entsprechenden Raumrichtung im Ausgangssignal des Richtmikrofons unterdrückt werden. Die räumliche Abhängigkeit der Unterdrückung bzw. der Sensitivität wird dabei als Richtcharakteristik bezeichnet. Diese kann auch frequenzabhängig variieren.

Soll nun durch die Richtcharakteristik Schall aus einer bestimmten Raumrichtung frequenzunabhängig unterdrückt werden, kann ein schmalbandiges Schallsignal von einer anderen Raumrichtung dazu führen, dass in Frequenzbändern in einer Umgebung des Schallsignals die Richtcharakteristik an das Schallsignal angepasst wird, wodurch sich die gewünschte Unterdrückung ändert. Mittels des angegebenen Verfahrens lässt sich der Einfluss eines solchen schmalbandigen Schallsignals aus einer anderen als der zu unterdrückenden Raumrichtung in anderen Frequenzbändern verringern.

Die Erfindung nennt weiter ein Hörgerät, insbesondere ein Hörhilfegerät, umfassend wenigstens ein Mikrofon zur Aufnahme eines Eingangssignals und eine Signalverarbeitungseinheit, welche dazu eingerichtet ist, das vorbeschriebene Verfahren durchzuführen. Die für das Verfahren und seine Weiterbildung genannten Vorteile könne hierbei sinngemäß auf das Hörgerät übertragen werden.

Nachfolgend wird ein Ausführungsbeispiel der Erfindung anhand einer Zeichnung näher erläutert. Hierbei zeigen jeweils schematisch:
- FIG 1: in einem Blockdiagram ein Verfahren zur frequenzabhängigen Rauschunterdrückung eines Eingangssignals nach Stand der Technik,
- FIG 2: die Ermittlung der Reduktionskoeffizienten für das Verfahren nach FIG 1 im Frequenzraum,
- FIG 3: in einem Blockdiagram ein Verfahren zur frequenzabhängigen Rauschunterdrückung eines Eingangssignals,
- FIG 4: die Ermittlung der Reduktionskoeffizienten für das Verfahren nach FIG 3 im Frequenzraum, und
- FIG 5: ein Hörhilfegerät mit einer Signalverarbeitungseinheit.

Einander entsprechende Teile und Größen sind in allen Figuren jeweils mit gleichen Bezugszeichen versehen.

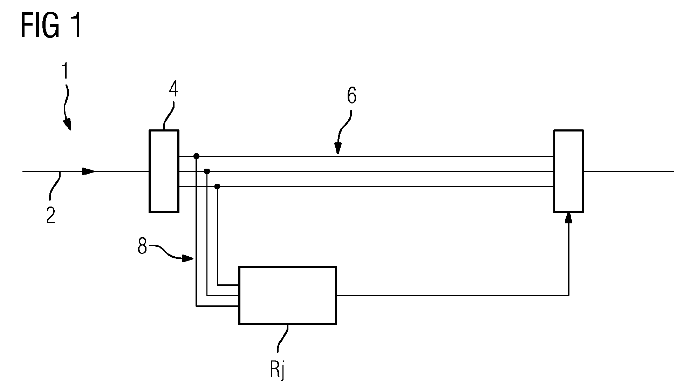

In FIG 1 ist in einem Blockdiagramm ein Verfahren 1 zur frequenzabhängigen Rauschunterdrückung nach Stand der Technik dargestellt. Ein Eingangssignal 2 wird von einer Filterbank 4 in verschiedene, nicht näher dargestellte Frequenzbänder zerlegt. Anschließend wird das Eingangssignal 2 auf einen Hauptsignalpfad 6 und einen Nebensignalpfad 8 aufgeteilt. Im Nebensignalpfad 8 wird für jedes der einzelnen Frequenzbänder anhand des jeweiligen Signalanteils ein Unterdrückungsparameter in Form eines Reduktionskoeffizienten Rj ermittelt. Im Hauptsignalpfad 6 wird in jedem Frequenzband der jeweilige Signalpegel anhand des Reduktionskoeffizienten Rj abgesenkt bzw. angehoben, wodurch ein Rauschen im Eingangssignal 2 frequenzabhängig unterdrückt wird.

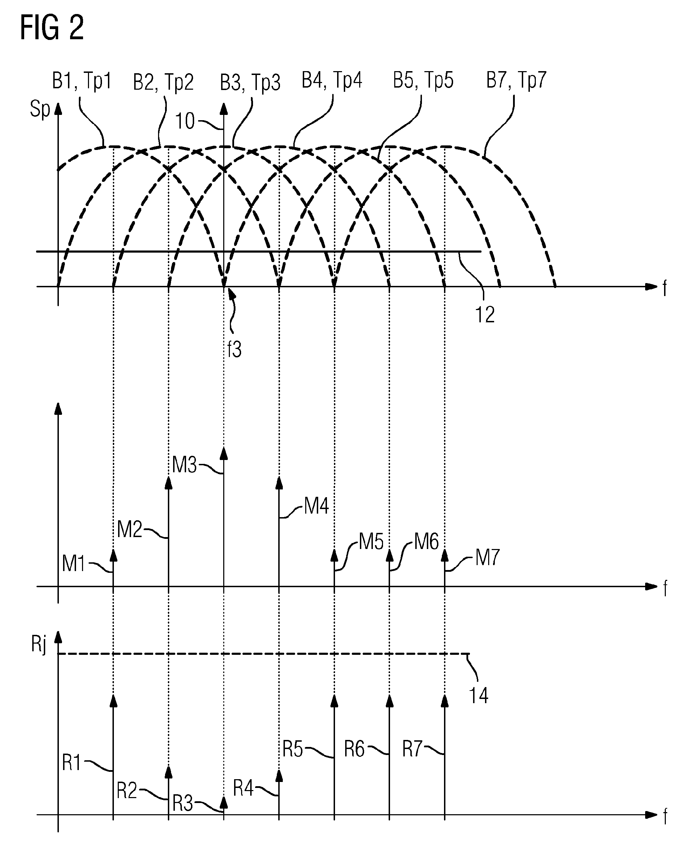

Die Wirkungsweise des anhand von FIG 1 beschriebenen Verfahrens 1 ist in FIG 2 im Frequenzraum dargestellt. Das Eingangssignal 2, welches in Abhängigkeit der Frequenz f aufgetragen ist, wird hierbei gebildet durch ein extrem schmalbandiges Nutzsignal 10 sowie ein breitbandiges Grundrauschen 12. Der Signalpegel Sp ist für das Nutzsignal 10 hierbei deutlich höher als für das Rauschen 12. Die Wirkungsweise der Filterbank 4 ist hier anhand der Betrags-Frequenzgänge Tp1 bis Tp7 der jeweiligen Frequenzbänder B1 bis B7 gezeigt. Das Nutzsignal 10 liegt im vorliegenden Beispiel genau auf der Mittenfrequenz f3 des Frequenzbandes B3, ist jedoch noch in den benachbarten Frequenzbändern B2 und B4 enthalten. Zur Ermittlung der Reduktionskoeffizienten R1 bis R7 wird nun für jedes einzelne der Frequenzbänder B1 bis B7 jeweils der Signalpegel M1 bis M7 ermittelt, welcher innerhalb des Betrags-Frequenzgangs Tp1 bis Tp7 des jeweiligen Frequenzbandes auftritt. Aus den Pegeln M1 bis M7 des jeweiligen Frequenzbandes wird nun der Reduktionskoeffizient R1 bis R7 durch Subtraktion des Pegels M1 bis M7 von einem Startwert 14 für die Unterdrückung ermittelt.

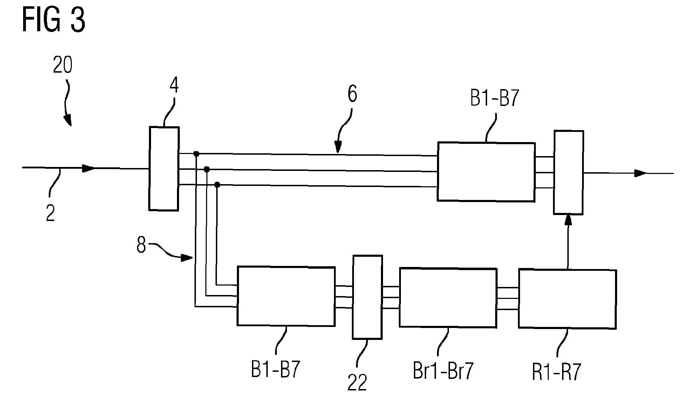

In FIG 3 ist in einem Blockdiagramm der Ablauf eines Verfahrens 20 zur frequenzabhängigen Rauschunterdrückung eines Eingangssignals 2 dargestellt. Das Eingangssignal 2 wird mittels einer Filterbank 4 in eine Mehrzahl von Frequenzbändern B1 bis B7 zerlegt und anschließend auf einen Hauptsignalpfad 6 und einen Nebensignalpfad 8 verteilt. Im Nebensignalpfad 8 werden die einzelnen Frequenzbänder B1 bis B7 jeweils durch einen Filter 22 in ihrer Bandbreite reduziert, so dass hierdurch jeweils ein reduziertes Frequenzband Br1 bis Br7 gebildet wird. In jedem reduzierten Frequenzband Br1 bis Br7 im Nebensignalpfad 8 wird nun anhand des jeweiligen Signalanteils des Eingangssignals 2 ein Unterdrückungsparameter in Form eines Reduktionskoeffizienten R1 bis R7 ermittelt, und im Hauptsignalpfad 6 in jedem Frequenzband B1 bis B7 der Signalpegel anhand des jeweiligen Reduktionskoeffizienten R1 bis R7, welcher im Nebensignalpfad 8 ermittelt wurde, abgesenkt bzw. angehoben, um somit frequenzabhängig ein Rauschen im Eingangssignal 2 zu unterdrücken.

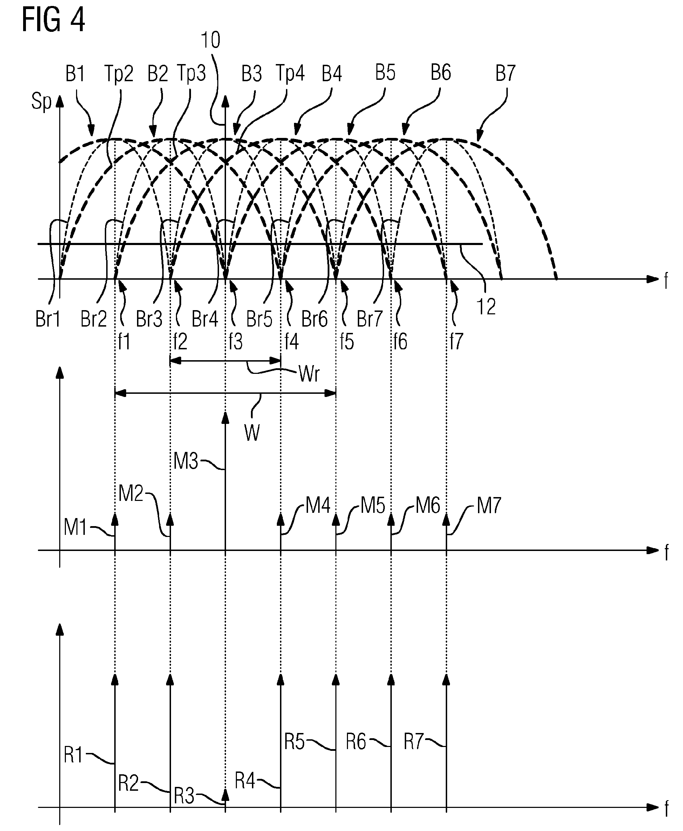

Die Wirkungsweise des in FIG 3 dargestellten Verfahrens 20 wird anhand von FIG 4 verdeutlicht. Der Signalpegel Sp des Eingangssignals 2, welches durch ein schmalbandiges Nutzsignal 10 überlagert von einem breitbandigen Rauschen 12 gebildet wird, ist hier gegen die Frequenz f aufgetragen. Die Filterbank 4 zerlegt das Eingangssignal 2 in einzelne Frequenzbänder B1 bis B7 jeweils unterschiedlicher Mittenfrequenz f1 bis f7 und gleicher Bandbreite W. Das Nutzsignal 10 ist hierbei zunächst in den Frequenzbändern B2 bis B4 umfasst, jedoch aufgrund der unterschiedlichen Betrags-Frequenzgänge Tp2 bis Tp4 bei der Frequenz des Nutzsignals 10 für die einzelnen Frequenzbänder B2 bis B4 mit einem unterschiedlichen Signalpegel Sp. Durch das Filter 22 findet nun im Nebensignalpfad 8 in jedem Frequenzband B1 bis B7 eine weitere Reduktion der Bandbreite W statt. Die Bandbreite wird dabei für jedes Frequenzband zu Wr reduziert, wodurch jeweils ein reduziertes Frequenzband Br1 bis Br7 mit jeweils gleicher Mittenfrequenz f1 bis f7 des ursprünglichen Frequenzbandes B1 bis B7 gebildet wird.

Durch diese Reduktion der Bandbreite W der Frequenzbänder B1 bis B7 ist das Nutzsignal 10 nun nur noch in einem reduzierten Frequenzband Br3 mit einem nennenswerten Signalpegel Sp zur verzeichnen. Wird nun in jedem reduzierten Frequenzband Br1 bis Br7 jeweils der Signalpegel M1 bis M7 ermittelt, so bestimmt sich dieser Pegel außerhalb des reduzierten Frequenzbands Br3 durch das Rauschen 12. Insbesondere wird der Pegel M2, M4 der reduzierten Frequenzbänder Br, Br4, welche in unmittelbarer Nachbarschaft zum reduzierten Frequenzband Br3 liegen, das den spektralen Hauptanteil des Nutzsignals 10 verzeichnet, nicht durch das Nutzsignal 10 beeinflusst. Die aus den Pegeln M1 bis M7 gebildeten Reduktionskoeffizienten R1 bis R7, anhand derer der Pegel des Eingangssignals 2 im Hauptsignalpfad 6 für das jeweilige Frequenzband B1 bis B7 abgesenkt werden soll, weisen nur für den Unterdrückungsparameter R3 eine erhebliche Abweichung von einer ansonsten gleichförmigen Rauschunterdrückung auf.

Das Frequenzband B3, welches das Nutzsignal 10 verzeichnet, wird also durch den geringeren Reduktionskoeffizienten R3 im Wesentlichen von der Rauschunterdrückung ausgenommen. Die benachbarten Frequenzbänder B2, B4 erfahren jedoch die vollständige Rauschunterdrückung. Der Signalanteil des Nutzsignals 10 innerhalb der Betrags-Frequenzgänge Tp2, Tp4 führt also nicht mehr zu einer Abschwächung der Reduktionskoeffizienten R2, R4, welche zu einer unzureichenden Rauschunterdrückung in der Umgebung des Nutzsignals 10 führen würde. Das Signal-zu-Rausch-Verhältnis wird hiermit insbesondere in der Umgebung des Nutzsignals 10 verbessert.

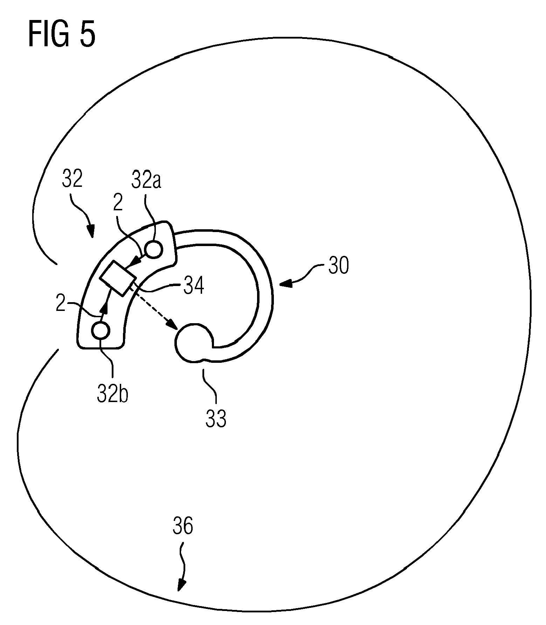

In FIG 5 ist schematisch ein als Hörhilfegerät ausgebildetes Hörgerät 30 gezeigt, welches ein Richtmikrofon 32, einen Hörer 33 und eine Signalverarbeitungseinheit 34 umfasst. Das Richtmikrofon 32 weist hierbei zwei omnidirektionale Mikrofone 32a, 32b auf, welche ein zweikanaliges Eingangssignal 2 an die Signalverarbeitungseinheit 34 senden. Die Signalverarbeitungseinheit 34 ist dazu eingerichtet, für einen Mehrzahl von Frequenzbändern jeweils eine Richtcharakteristik 36 zu bilden, und für jedes Frequenzband die Richtcharakteristik in Abhängigkeit von in vorbeschriebener Weise ermittelten Unterdrückungsparametern zu adaptieren, um hierdurch richtungsabhängig ein Rauschen zu unterdrücken. Das rauschunterdrückte Ausgangssignal wird, ggf. nach weiterer Signalverarbeitung, von der Signalverarbeitungseinheit 34 an den Hörer 33 übermittelt.

Obwohl die Erfindung im Detail durch das bevorzugte Ausführungsbeispiel näher illustriert und beschrieben wurde, ist die Erfindung nicht durch dieses Ausführungsbeispiel eingeschränkt. Andere Variationen können vom Fachmann hieraus abgeleitet werden, ohne den Schutzumfang der Erfindung zu verlassen.

## Patentansprüche

1. Verfahren (20) zur frequenzabhängigen Rauschunterdrückung eines Eingangssignals (2),
wobei das Eingangssignal (2) auf einen Hauptsignalpfad (6) und einen Nebensignalpfad (8) verteilt wird,
wobei das Eingangssignal (2) mittels einer Filterbank (4) in eine Mehrzahl von Frequenzbändern (B1-B7) jeweils bestimmter Bandbreite (W) und Mittenfrequenz (f1-f7) zerlegt wird,
wobei im Nebensignalpfad (8) in jedem Frequenzband (B1-B7) die Bandbreite (W) des Signalanteils reduziert und dabei jeweils ein reduziertes Frequenzband (Br1-Br7) gebildet wird,
wobei in jedem reduzierten Frequenzband (Br1-Br7) anhand des Signalanteils des Eingangssignals (2) ein Unterdrückungsparameter (R1-R7) ermittelt wird, und
wobei im Hauptsignalpfad (6) in jedem Frequenzband (B1-B7) ein Rauschen (12) im Eingangssignal (2) anhand des jeweiligen Unterdrückungsparameters (R1-R7) unterdrückt wird.

2. Verfahren (20) nach Anspruch 1,
wobei in einer Anzahl an reduzierten Frequenzbändern (Br1-Br7) zur Ermittlung des Unterdrückungsparameters (R1-R7, Rj) jeweils ein Pegel des Signalanteils über die reduzierte Bandbreite (Br1-Br7) herangezogen wird.

3. Verfahren (20) nach Anspruch 1 oder Anspruch 2,
wobei das Eingangssignal (2) wenigstens für den Nebensignalpfad (8) digitalisiert wird.

4. Verfahren (20) nach einem der vorhergehenden Ansprüche,
wobei im Nebensignalpfad (8) in jedem Frequenzband (B1-B7) die Bandbreite (W) des Signalanteils durch ein Filter (22) reduziert wird.

5. Verfahren (20) nach Anspruch 4,
wobei im Nebensignalpfad (8) für jedes Frequenzband (B1-B7) die Mittenfrequenz (f1-f7) auf Null verschoben wird, und anschließend die Bandbreite (W) des Signalanteils durch ein Tiefpass-Filter (22) reduziert wird.

6. Verfahren (20) nach einem der vorhergehenden Ansprüche,
wobei durch ein Richtmikrofon (32) das Eingangssignal (2) aufgenommen wird, und
wobei im Eingangssignal (2) anhand der Unterdrückungsparameter (R1-R7) das Rauschen (12) durch eine frequenzabhängige Adaption der Richtcharakteristik (36) des Richtmikrofons (32) unterdrückt wird.

7. Verfahren (20) nach Anspruch 6,
wobei durch das Richtmikrofon (32) ein mehrkanaliges Eingangssignal (2) aufgezeichnet wird,
wobei das Eingangssignal (2) in jedem Kanal mittels einer Filterbank (4) in eine Mehrzahl von Frequenzbändern (B1-B7) zerlegt wird,
wobei für jeden Kanal jeweils ein Unterdrückungsparameter (R1-R7) für jedes Frequenzband (B1-B7) mittels des entsprechenden reduzierten Frequenzbandes (Br1-Br7) ermittelt wird, und
wobei für jedes Frequenzband (B1-B7) die Richtcharakteristik (36) aus den Signalanteilen aller Kanäle in Abhängigkeit von den jeweiligen Unterdrückungsparameter (R1-R7) adaptiert wird.

8. Hörgerät (30), insbesondere ein Hörhilfegerät, umfassend wenigstens ein Mikrofon (32a, 32b) zur Aufnahme eines Eingangssignals (2) und eine Signalverarbeitungseinheit (34), welche dazu eingerichtet ist, das Verfahren (20) nach einem der vorhergehenden Ansprüche durchzuführen.
